# EUROPÄISCHE PATENTSCHRIFT

(11) **EP 0 766 917 B1**
(45) Veröffentlichungstag und Bekanntmachung des Hinweises auf die Patenterteilung: **28.04.1999**
(21) Anmeldenummer: 96115446.5
(22) Anmeldetag: 26.09.1996
(51) Int. Cl.: A01M 7/00

(54) **Fahrbare Spritzeinrichtung**
Mobile spraying apparatus
Appareil de pulvérisation mobile

(30) Priorität: 05.10.1995 DE 29515801 U
(43) Veröffentlichungstag der Anmeldung: 09.04.1997
(73) Patentinhaber: Maschinenfabrik Rau GmbH, D-73235 Weilheim (DE)
(72) Erfinder: Taus, Christian, 73230 Kirchheim-Teck (DE)
(74) Vertreter: Thul, Stephan, Dipl.-Phys.

(56) Entgegenhaltungen:
- EP-A- 0 405 244
- CH-A- 669 885
- DE-C- 3 630 800
- US-A- 4 629 087

## Beschreibung

Die Erfindung betrifft eine fahrbare Spritzeinrichtung zum Versprühen einer Spritzbrühe, insbesondere flüssiger Pflanzenschutzmittel, Düngemittel und dergleichen, auf Feldern mit einem an einein selbstfahrenden oder als Anhänger ausgebildeten Fahrzeug angebrachten und vorzugsweise länglich ausgebildeten sowie liegend auf dem Fahrzeug angeordneten Hauptbehälter für die Spritzbrühe, einem ebenfalls vom Fahrzeug getragenen Spülwasserbehälter mit einem am Fahrzeug vorzugsweise seitlich ausfahrbar angeordneten Spritzaggregat mit Spritzdüsen und am Fahrzeug angebrachten Pump- und Armaturmitteln, die durch Leitungen mit dem Hauptbehälter, dem Spülwasserbehälter und den Spritzdüsen des Spritzaggregates derart verbunden sind, daß wahlweise entweder die Spritzbrühe aus dem Hauptbehälter zum Spritzaggregat oder das Spülwasser aus dem Spülwasserbehälter in den Hauptbehälter oder zum Spritzaggregat oder zu einem Außenreinigungsgerät gepumpt wird (siehe EP-A-405 244).

Bei Pflanzenschutzmittel- und Düngemittelspritzeinrichtungen ist üblicherweise auf einem an eine Zugmaschine, insbesondere einem Traktor, anhängbaren Fahrgestell ein größerer Hauptbehälter mit einem Fassungsvermögen von etwa 2.500 bis 3.000 Ltr. angeordnet, der zur Aufnahme eines flüssigen Pflanzenschutzmittels oder dergleichen dient, welches von seitlich von dem Fahrgestell abragenden Sprüharmen der Spritzeinrichtung ausgesprüht wird.

Nach dem Gebrauch ist es erforderlich, den Hauptbehälter und das Spritzaggregat sorgfältig zu reinigen, um das Pflanzenschutzmittel zu entfernen und insbesondere die durch seine Anwesenheit bedingte Korrosion zu verhindern. Hierzu wird aus dem Spülwasserbehälter reines Wasser in den Hauptbehälter eingefüllt, um die dort noch vorhandenen Pflanzenschutzmittelreste etwa im Verhältnis 10 : 1 zu verdünnen, und die verdünnte Lösung wird dann über die Felder versprüht, bis der Hauptbehälter leer ist.

Durch diesen Spülvorgang wird also gewährleistet, daß die Pflanzenschutzmittel bzw. Düngemittel in stark verdünnter Form nur auf den Feldern versprüht werden und keine Restmengen entsorgt werden müssen. Außerdem werden durch die Spülung auch Korrosionen in den Zuführleitungen und an den Sprühdüsen der Sprüharme vermieden.

Zur Aufnahme des Spülwassers ist bei den bekannten Spritzeinrichtungen der Spülwasserbehälter mit einem Fassungsvermögen von etwa 150 bis 250 Litern seitlich neben dem Hauptbehälter am Fahrgestell befestigt. Hierdurch wird jedoch nicht nur das äußere Erscheinungsbild der Spritzeinrichtung, sondern auch das Gleichgewicht der im allgemeinen an schmalspurigen Fahrgestellen angebrachten Spritzeinrichtungen beeinträchtigt. Zwischen Haupt- und Spülwasserbehälter kann sich nur schwer zu entfernender Schmutz sammeln. Weiter behindert der außen angebrachte Spülwasserbehälter die Manipulationen der Bedienungsperson und das Verlegen der erforderlichen Leitungen. Er ist außerdem einer erhöhten Beschädigungsgefahr im rauhen Betrieb ausgesetzt.

Aufgabe der Erfindung ist es, eine weitere Spritzeinrichtung der eingangs genannten Art anzugeben. Sie soll frei von Gleichgewichtsproblemen durch den Spülwasserbehälter sowie leicht zu bedienen, zu montieren und sauber zu halten sein.

Diese Aufgabe wird erfindungsgemäß dadurch gelöst, daß der Hauptbehälter einen zu seinem Innenraum abgedichteten, im wesentlichen vertikalen Schacht aufweist, in welchem der Spülwasserbehälter vorgesehen ist.

Durch die erfindungsgemäße Anordnung des Spülwasserzusatzbehälters innerhalb des Hauptwasserbehälters wird erreicht, daß der Spülwasserbehälter nach außen nur durch seine obere Einfüllöffnung und die unten abgehende(n) Leitung(en) in Erscheinung tritt und das Gleichgewicht der Spritzeinrichtung nur wenig oder, wenn er bezüglich der Querrichtung in der Mitte angeordnet ist, überhaupt nicht stört.

Der Schacht kann entweder selbst als Spülwasserbehälter ausgebildet sein oder gemäß einer bevorzugten Ausgestaltung der Erfindung einen separaten Einsatz aufnehmen.

Durch die Abdichtung des Schachtes zum Innenraum des Hauptbehälters wird sichergestellt, daß das in dem Hauptbehälter enthaltene Pflanzenschutzmittel auch dann nicht aus dem Hauptbehälter entweichen kann, wenn der Spülwasserbehälter aus der Aufnahme genommen wird. Vorzugsweise können in vorteilhafter Weise der Hauptbehälter und der Spülwasserbehälter getrennt jeder für sich in optimaler Weise hergestellt und erst anschließend zu einer Baueinheit zusammengesetzt werden, die dann ihrerseits einheitlich gehandhabt und auf dem Fahrgestell montiert werden kann.

Besonders vorteilhaft wirkt sich der Schacht im Hauptbehälter auch dahingehend aus, daß er die besonders in Fahrtrichtung auftretenden Schwappbewegungen der Spritzbrühe im Hauptbehälter dämpft. Hierzu sollte er in Fahrtrichtung bzw. in Längsrichtung des Hauptbehälters zumindest im wesentlichen bei der Hälfte von dessen Länge angeordnet sein, derart, daß vor und hinter dem Schacht zumindest in etwa gleiche Volumina vorhanden sind. Befindet sich der Schacht darüberhinaus auch bezüglich der Querabmessung des Hauptbehälters in dessen Mitte, entstehen beidseits des Schachtes Strömungseinschnürungen für die hin- und herschwappende Spritzbrühe, was das Dämpfungsverhalten wesentlich begünstigt und auch die Fahrsicherheit erhöht.

Die Spritzvorrichtung kann nicht nur auf einem Anhänger, sondern auch auf einem Motorfahrzeug selbst, bspw. einem Pritschenwagen, angeordnet werden oder als selbstfahrende Spritze ausgebildet sein, bei der das Spritzgestänge auch vorne vorgesehen sein kann.

Hinsichtlich weiterer vorteilhafter Ausgestaltungen der erfindungsgemäßen Spritzeinrichtung wird auf die Unteransprüche sowie die nachfolgende Beschreibung eines Ausführungsbeispiels anhand der Zeichnung verwiesen. In der Zeichnung zeigt
- Figur 1: eine teilweise geschnittene Seitenansicht einer fahrbaren Spritzeinrichtung gemäß der vorliegenden Erfindung mit einem auf einem nur gestrichelt angedeuteten Fahrgestell angebrachten Hauptbehälter und einem in diesen eingesetzten Spülwasserbehälter,
- Figur 2: eine teilweise geschnittene Vorderansicht der Spritzeinrichtung von Fig. 1 in etwas vergrößertem Maßstab,
- Figur 3: eine Draufsicht des Hauptbehälters nach Fig. 1 bei nur gestrichelt angedeutetem Spülwasserbehälter, und
- Figur 4: eine Variante der erfindungsgemäßen Spritzeinrichtung in einer Fig. 2 entsprechenden Darstellung.

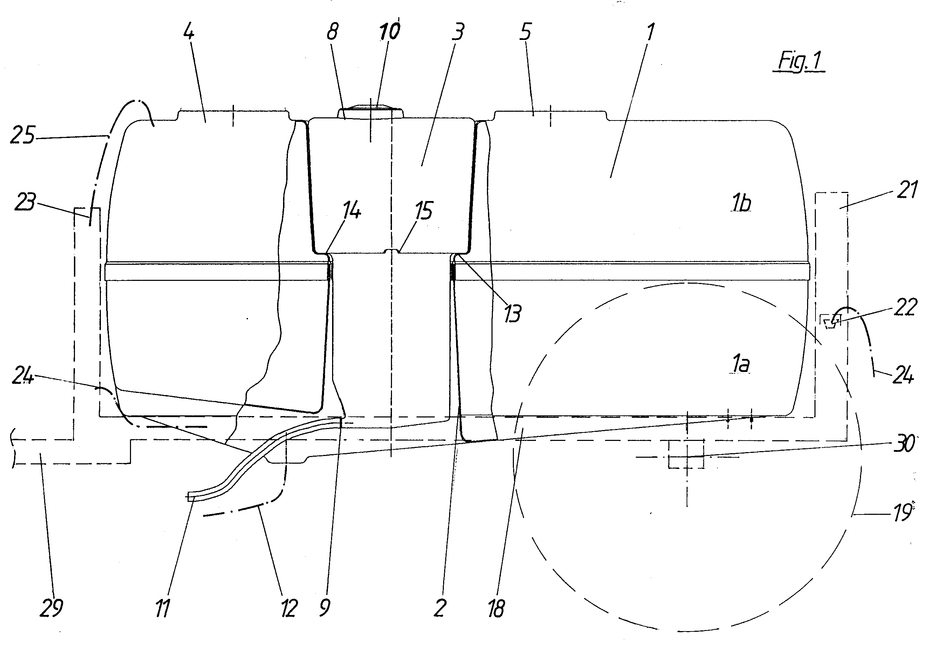

Nach Fig. 1 ist ein aus einer unteren Hälfte 1a und einer oberen Hälfte 1b zusammengesetzter, länglicher zylinderartiger Hauptbehälter 1 liegend auf einem mittels einer nur angedeuteten Deichsel 29 beispielsweise an einen Traktor anhängbaren Fahrgestell 18 mit im hinteren Bereich angeordneter Achse 30 mit Rädern 19 angebracht.

Der Hauptbehälter 1 ist länglich mit einer etwa rechteckförmigen Grundfläche ausgebildet und besteht aus Kunststoff, vorzugsweise aus glasfaserverstärktem Kunststoff oder Polyethylen. Oben weist der Hauptbehälter 1 zwei Einfüllöffnungen 4, 5 auf, die durch Deckel 6, 7 verschließbar sind.

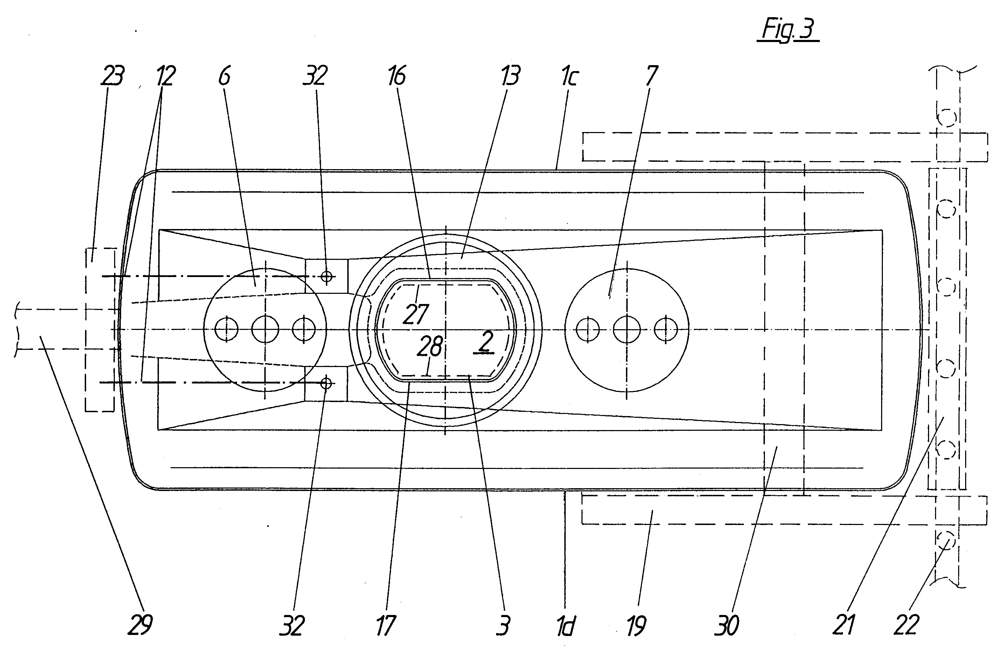

Unten erstrecken sich von einem Ablaufanschluß 32 des Hauptbehälters 1 strichpunktiert angedeutete Leitungen 12 (Fig. 1,3), die zu vorn auf dem Fahrgestell 18 angeordneten, nur gestrichelt angedeuteten Pump- und Armaturmitteln 23 führen, die über eine strichpunktiert gezeichnete Leitung 24 ein hinten am Fahrgestell 18 gehaltenes, Spritzdüsen 22 aufweisendes Spritzaggregat 21 mit der aus dem Hauptbehälter 1 abgesaugten Spritzbrühe speisen. Um eine kontinuierliche Versorgung der Spritzdüsen 22 auch in Hanglagen und bei wenig gefülltem Hauptbehälter 1 zu gewährleisten, läuft der Boden des Hauptbehälters 1 in Richtung des Anschlusses 32 der Leitungen 12 schräg nach unten zu, so daß sich die Spritzbrühe dort sammelt und vollständig abgesaugt werden kann.

Etwa mittig ist im Hauptbehälter 1 ein gegenüber dem Innenraum des Hauptbehälters 1 flüssigkeitsdicht abgeschlossener Schacht 2 vorgesehen, der einen oben und unten offenen, vertikalen Durchgang durch den Hauptbehälter 1 schafft, jedoch seitlich noch eine Strömungsverbindung für die Spritzbrühe im vorderen und hinteren Teil des Hauptbehälters 1 beläßt, welche jedoch eine Einschnürung darstellt, die einem Hin- und Herschwappen der Flüssigkeit in dem Hauptbehälter 1 entgegenwirkt.

In den Schacht 2 ist von oben ein Spülwasserbehälter 3 eingesetzt, der an seiner Oberseite eine durch einen Deckel 10 verschlossene Einfüllöffnung 8 und im Bodenbereich einen Anschluß 9 für die Leitung 11 aufweist, die zu den Pump- und Armaturmitteln 23 führt.

Der Spülwasserbehälter 3 und der Schacht 2 sind komplementär zueinander ausgebildet und haben eine im wesentlichen zylindrische Grundform. Im oberen Bereich des Hauptbehälters 1 nahe der Grenze zwischen unterer und oberer Hälfte 1a, 1b weist der Schacht 2 eine nach innen ragende Ringstufe 13 auf, die eine Auflagefläche für eine nach innen ragende Ringstufe 14 des Spülwasserbehälters 3 bildet. Oberhalb dieser Ringstufen 13, 14 sind der Schacht 2 und der Spülwasserbehälter 3 in Richtung der Ringstufen 13, 14 sich konisch leicht verjüngend ausgebildet, wodurch das Einsetzen sowie der Halt des Spülwasserbehälters 3 in den Schacht 2 und das Ausformen bei der Herstellung erleichtert sind.

An der Ringstufe 14 des Spülwasserbehälters 3 sind rundum bevorzugt mehrere Ausnehmungen 15 vorgesehen, durch die beispielsweise Regenwasser, das in den Schacht 2 gelangt und sich an der Ringstufe 14 ansammelt, nach unten abfließen kann.

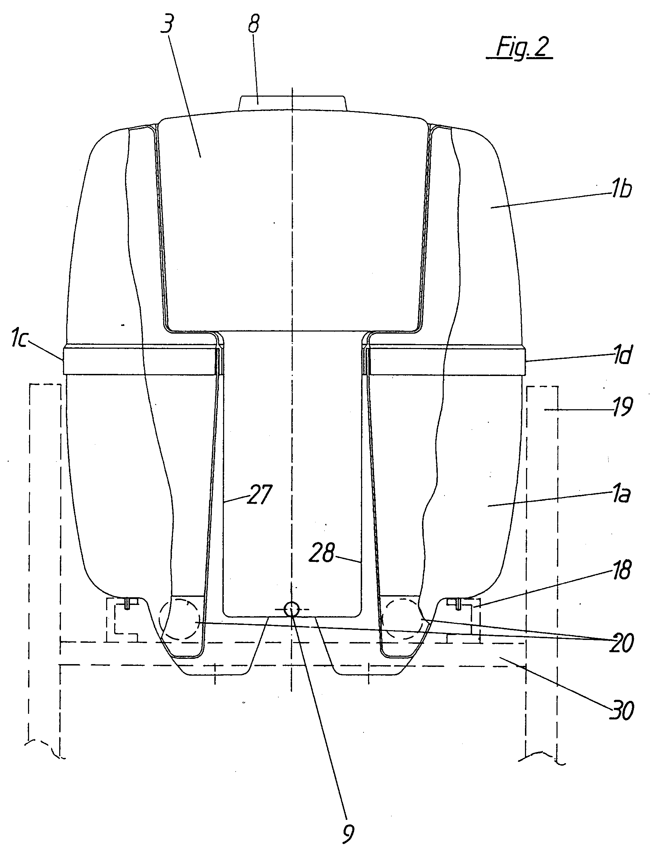

Nach Fig. 3 sind der Schacht 2 und der Spülwasserbehälter 3 in dem Bereich unterhalb der Ringstufen 13, 14 seitlich abgeflacht ausgebildet. Diese Abflachungen 16, 17 verlaufen parallel zu den Seitenbegrenzungen 1c, 1d des Hauptbehälters 1; sie haben den Sinn, im unteren Bereich des Hauptbehälters 1 Platz für sich in Längsrichtung erstreckende Rührwerke 20 (Fig. 2) zu schaffen, durch welche die Spritzbrühe im Hauptbehälter 1 umgewälzt wird, um eine gute Durchmischung des Pflanzenschutzmittels zu erreichen und Ablagerungen in dem Hauptbehälter 1 zu verhindern. Bei den Rührwerken 20 handelt es sich üblicherweise um in Längsrichtung des Hauptbehälters 1 verlaufende, bodennahe und rundum oder an bestimmten Seiten mit Bohrungen versehene Rohre, durch welche die Spritzbrühe umgewälzt wird. Außerdem wird durch die Abflachungen 16, 17 bzw. 27, 28 der seitliche Durchflußquerschnitt des Hauptbehälters in der unteren Hälfte 1a vergrößert und der Spülwasserbehälter 3 im Schacht 2 verdrehsicher gehalten.

Die Herstellung der erfindungsgemäßen Spritzeinrichtung geht beispielsweise wie folgt vor sich:

Zunächst werden die beiden Hälften 1a, 1b des Hauptbehälters 1 im Handauflegeverfahren aus glasfaserverstärktem Kunststoff hergestellt und zusammengefügt sowie durch Kleben oder Schweißen flüssigkeits- und druckdicht miteinander verbunden. Parallel dazu wird der Spülwasserbehälter 3 nach dem Rotationsverfahren hergestellt und nach Fertigstellung in den Schacht 2 des Hauptbehälters 1 so eingesetzt, daß er die Position nach den Fig. 1, 2 annimmt. Alternativ kann auch der Hauptbehälter einteilig im Rotationsverfahren, insbesondere aus Polyethylen, hergestellt werden. Eine feste Verbindung zwischen dem Hauptbehälter 1 und dem Spülwasserbehälter 3 kann z. B. durch Kleben oder Schweißen hergestellt werden.

Anschließend wird dann die aus dem Hauptbehälter 1 und dem Spülwasserbehälter 3 gebildete Baueinheit auf dem bereits mit den Pump- und Armaturmitteln 23 sowie dem Spritzaggregat 21 versehenen Fahrgestell 18 montiert.

Im Betrieb wird der Hauptbehälter 1 von oben durch die Einfüllöffnungen 4 oder 5 mit der Spritzbrühe befüllt. In den Spülwasserbehälter 3 wird durch die Einfüllöffnung 8 Wasser eingefüllt.

Zum Versprühen der Spritzbrühe werden die am Spritzaggregat 21 vorgesehenen Ausleger, an denen sich die Spitzdüsen 22 befinden, seitlich ausgefahren bzw. ausgeklappt. Dann wird durch die Pump- und Armaturmittel 23 über die Leitungen 12 Spritzbrühe aus dem Hauptbehälter 1 abgesaugt und über die Leitung bzw. mehrere Leitungen 24 zu den Spritzdüsen 22 geführt, wo sie nach unten auf die vom Fahrgestell 18 überfahrenen Felder gesprüht wird.

Soll der Spritzbetrieb für eine längere Zeit unterbrochen werden, können die Pump- und Armaturmittel 23 nach entsprechender Umschaltung von nicht dargestellten Ventilen reines Wasser über die Leitung 11 aus dem Spülwasserbehälter 3 absaugen und durch die Leitung(en) 24 zu den Spritzdüsen 22 führen, wodurch die Leitung(en) 24 und Spritzdüsen 22 von der Spritzbrühe gereinigt und so gegen Korrosion geschützt werden. Der Spritzbetrieb kann durch Rückschaltung der Ventile in den Pump- und Armaturmitteln 23 jederzeit fortgesetzt werden.

Sobald der Hauptbehälter 1 leer ist, kann durch entsprechende Umschaltung von Ventilen in den Pump- und Armaturmitteln 23 Wasser über die Leitung 11 aus dem Spülwasserbehälter 3 abgesaugt und über eine ebenfalls nur strichpunktiert angedeutete Leitung 25 in das Innere des Hauptbehälters 1 geleitet werden, und insbesondere dort versprüht werden, wo sich das Wasser mit den noch vorhandenen Resten der Spritzbrühe vermischt, bis diese soweit verdünnt ist, daß keine Korrosion mehr befürchtet werden muß und auch die Gefährlichkeit der Spritzbrühe für die Umgebung nicht mehr gegeben ist. Anschließend wird dann die so stark verdünnte Spritzbrühe durch erneutes Umschalten der Ventile in den Pump- und Armaturmitteln 23 über die Leitung(en) 12 aus dem Hauptbehälter 1 abgesaugt und durch die Leitung(en) 24 zu den Spritzdüsen 22 geführt, wo sie auf die Felder versprüht wird, über die das Fahrgestell 18 hinweggezogen wird. Auf diese Weise kann die stark verdünnte Rest-Spritzbrühe auf einfachste Weise entsorgt und gleichzeitig die gewünschte Reinigung von Hauptbehälter 1, Leitung(en) 12, 24, Pump- und Armaturmitteln 23, Spritzdüsen 22 bewirkt werden.

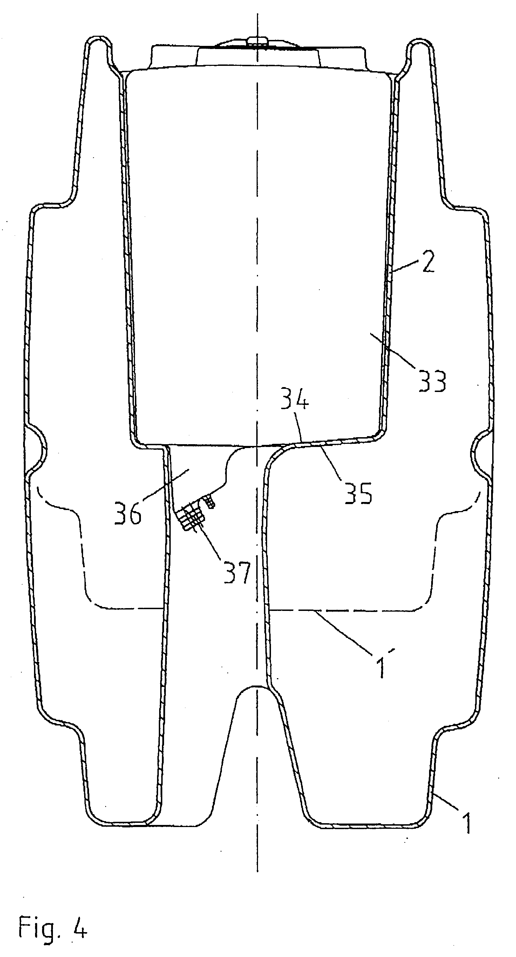

Bei der in Fig. 4 dargestellten Variante der erfindungsgemäßen Spritzeinrichtung ist im Gegensatz zu der zuvor beschriebenen Variante der Spülwasserbehälter 33 nicht mit einer Ringstufe versehen. Der Spülwasserbehälter 33 stützt sich vielmehr mit seinem Boden 34 auf einer erweiterten Ringstufe 35 des Hauptbehälters 1 ab. Der eigentliche Aufnahmebereich des Spülwasserbehälters 33 erstreckt sich bei dieser Variante also nur oberhalb der Ringstufe 35 und nicht, wie bei der zuvor beschriebenen Variante, auch unterhalb der Ringstufe. Lediglich der Sumpf 36 und die Anschlußeinrichtung 37 für hier nicht dargestellte Leitungen erstrecken sich bei dieser Variante bis unterhalb der Ringstufe 35.

Diese Ausgestaltung eröffnet die Möglichkeit, ein und denselben Spülwasserbehälter 33 für Hauptbehälter 1, 1' mit unterschiedlichem Aufnahmevolumen zu verwenden, wie dies in Fig. 4 gestrichelt eingezeichnet ist. Selbstverständlich kann der Spülwasserbehälter 33 auch für alle zwischen dem großen Hauptbehälter 1 und dem kleinen Hauptbehälter 1' gelegenen Zwischengrößen verwendet werden.

Der Schacht 2 und der Spülbehälter 3 bzw. 33 können nicht nur kreiszylindrisch, sondern auch im Querschnitt rechteckig, beispielsweise quadratisch ausgebildet sein. Vorteilhafterweise kann hierdurch das Aufnahmevolumen des Spülbehälters 3 bzw. 33 bei unverändertem Hauptbehälter vergrößert werden, oder aber der Hauptbehälter 1 kann bei unverändertem Aufnahmevolumen des Spülbehälters 3 bzw. 33 schmaler ausgebildet werden, ohne die notwendigen Freiräume zwischen Spülbehälter 3 bzw. 33 und Hauptbehälter 1 zu beeinträchtigen.

Wichtig ist in allen Fällen der Grundgedanke eines vertikalen Schachtes 2, der ein Befüllen des Spülbehälters 3 bzw. 33 von oben und ein Abziehen des Spülwassers von unten her ermöglicht, eine Verschmutzung auf ein Minimum reduziert und das Reinigen erleichtert. Durch das Vorsehen einer Ringstufe 13 bzw. 35 in dem Schacht 2 kann der Spülwasserbehälter 3 bzw. 33 einfach eingesetzt werden, ohne daß separate Befestigungsmittel erforderlich wären. Bei einem im Querschnitt rechteckigen Schacht 2 ist der komplementär geformte Spülwasserbehälter 3 bzw. 33 zugleich gegen Verdrehen gesichert.

So wie im Schacht 2 ergeben sich durch die erfindungsgemäße Ausgestaltung der Erfindung auch im Hauptbehälter 1 nur wenig bzw. keine toten Winkel und das Rühren der Brühe im Hauptbehälter und das Reinigen desselben ist erleichtert.

### Bezugszeichenliste

- 1, 1': Hauptbehälter
- 1a: untere Hälfte von 1
- 1b: obere Hälfte von 1
- 1c: Seitenbegrenzung von 1
- 1b: Seitenbegrenzung von 1
- 2: Schacht
- 3: Spülwasserbehälter
- 4: Einfüllöffnung
- 5: Einfüllöffnung
- 6: Deckel
- 7: Deckel
- 8: Einfüllöffnung
- 9: Anschluß
- 10: Deckel
- 11: Leitung
- 12: Leitung
- 13: Ringstufe
- 14: Ringstufe
- 15: Ausnehmung
- 16: Abflachung
- 17: Abflachung
- 18: Fahrgestell
- 19: Rad
- 20: Rührwerk
- 21: Spritzaggregat
- 22: Spritzdüse
- 23: Pump- und Armaturmittel
- 24: Leitung
- 25: Leitung
- 26:
- 27: Abflachung
- 28: Abflachung
- 29: Deichsel
- 30: Achse
- 31:
- 32: Ablaufanschluß
- 33: Spülwasserbehälter
- 34: Boden
- 35: Ringstufe
- 36: Sumpf
- 37: Anschlußeinrichtung

## Patentansprüche

1. Fahrbare Spritzeinrichtung zum Versprühen einer Spritzbrühe, insbesondere flüssiger Pflanzenschutzmittel, Düngemittel und dergleichen, auf Feldern mit einem an einem selbstfahrenden oder als Anhänger ausgebildeten Fahrzeug (18) angebrachten und vorzugsweise länglich ausgebildeten sowie liegend auf dem Fahrzeug (18) angeordneten Hauptbehälter (1) für die Spritzbrühe, einem ebenfalls vom Fahrzeug (18) getragenen Spülwasserbehälter (3) mit einem am Fahrzeug (18) vorzugsweise seitlich ausfahrbar angeordneten Spritzaggregat (21) mit Spritzdüsen (22) und am Fahrzeug (18) angebrachten Pump- und Armaturmitteln (23), die durch Leitungen (11, 12, 24) mit dem Hauptbehälter (1), dem Spülwasserbehälter (3) und den Spritzdüsen (22) des Spritzaggregates (21) derart verbunden sind, daß wahlweise entweder die Spritzbrühe aus dem Hauptbehälter (1) zum Spritzaggregat (21) oder das Spülwasser aus dem Spülwasserbehälter (3) in den Hauptbehälter (1) oder zum Spritzaggregat (21) oder zu einem Außenreinigungsgerät gepumpt wird,
dadurch **gekennzeichnet,**
daß der Hauptbehälter (1) einen zu seinem Innenraum abgedichteten, im wesentlichen vertikalen Schacht (2) aufweist, in welchem der Spülwasserbehälter (3) vorgesehen ist.

2. Spritzeinrichtung nach Anspruch 1,
dadurch **gekennzeichnet,**
daß der Hauptbehälter (1) im wesentlichen die Form eines liegenden, sich in Fahrtrichtung erstreckenden Zylinders hat und der Schacht (2) vorzugsweise von beiden Seitenbegrenzungen (1c, 1d) des Hauptbehälters (1) gleichen Abstand aufweist.

3. Spritzeinrichtung nach Anspruch 1 oder 2,
dadurch **gekennzeichnet,**
daß der Schacht (2) in vertikaler Richtung länglich ausgebildet ist und vorzugsweise zumindest im wesentlichen einen kreisförmigen oder rechteckigen Querschnitt aufweist.

4. Spritzeinrichtung nach einem der Ansprüche 1 bis 3,
dadurch **gekennzeichnet,**
daß der Spülwasserbehälter (3) als separater Einsatz ausgebildet ist, der in dem Schacht (2) bevorzugt drehsicher gehalten ist.

5. Spritzeinrichtung nach Anspruch 4,
dadurch **gekennzeichnet,**
daß der Schacht (2) oben und vorzugsweise auch unten offen ist.

6. Spritzeinrichtung nach Anspruch 4 oder 5,
dadurch **gekennzeichnet,**
daß der Schacht (2) eine Ringstufe (13, 35) aufweist, die eine nach oben weisende Auflagefläche für den Spülwasserbehälter (3, 33) bildet.

7. Spritzeinrichtung nach Anspruch 6,
dadurch **gekennzeichnet,**
daß sich der Spülwasserbehälter (3) bis unterhalb der Ringstufe (13) erstreckt und eine dazu komplementäre, eine nach unten weisende Gegenfläche bildende Ringstufe (14) aufweist.

8. Spritzeinrichtung nach Anspruch 6,
dadurch **gekennzeichnet,**
daß sich der Spülwasserbehälter (33) im wesentlichen nur oberhalb der Ringstufe (35) erstreckt und mit seinem Boden (34) auf der Ringstufe (35) aufliegt.

9. Spritzvorrichtung nach Anspruch 6 bis 8,
dadurch **gekennzeichnet,**
daß der Spülwasserbehälter (3, 33) und der Schacht (2) zumindest oberhalb der Ringstufe (13, 35) komplementär zueinander ausgebildet sind.

10. Spritzeinrichtung nach einem der vorhergehenden Ansprüche,
dadurch **gekennzeichnet,**
daß der Schacht (2) zumindest im Bodenbereich des Hauptbehälters (1) quer zur Längsrichtung des Hauptbehälters (1) ausreichend schmal ist, um im Bodenbereich des Hauptbehälters (1) sich im wesentlichen über die ganze Länge des Hauptbehälters (1) erstreckende Rührwerke (20) vorsehen zu können, und insbesondere etwa parallel zu den Seitenbegrenzungen (1c, 1d) des Hauptbehälters (1) verlaufende Abflachungen (16, 17) aufweist, denen komplementäre Abflachungen (27, 28) des Spülwasserbehälters (3) entsprechen.

## Claims

1. Mobile spraying apparatus for the spraying of a sprayable liquor, in particular a liquid plant protection agent, fertilisers and the like, onto fields and comprising a main container (1) for the sprayable liquor mounted on a self-powered vehicle (18), or on a vehicle formed as a trailer, the container preferably being of elongate shape and arranged horizontally on the vehicle (18), a flushing water container (3) likewise carried by the vehicle (18), a spray unit (21) arranged on the vehicle (18) and preferably extendible sideways, the spray unit having spray nozzles (22) and pump and fitting means (23) mounted on the vehicle and connected by lines (11, 12, 24) to the main container (1), to the flushing water container (3) and to the spray nozzles (22) of the spray unit (21) in such a way that optionally either the sprayable liquor from the main container (1) is pumped to the spray unit (21), or the flushing water is pumped from the flushing water container (3) into the main container (1), or to the spray unit (21), or to an external cleaning apparatus, characterized in that the main container (1) has a substantially vertical shaft (2), in which the flushing water container (3) is provided and which is sealed off relative to its inner space.

2. Spraying apparatus in accordance with claim 1, characterized in that the main container (1) has essentially the form of a horizontally disposed cylinder extending in the direction of travel, and the shaft (2) preferably has the same spacing from the two lateral boundaries (1c, 1d) of the main container (1).

3. Spraying apparatus in accordance with claim 1 or claim 2, characterized in that the shaft (2) is of elongate shape in the vertical direction and preferably has an at least substantially circular or rectangular cross-section.

4. Spraying apparatus in accordance with one of the claims 1 to 3, characterized in that the flushing water container (3) is formed as a separate insert, which is preferably rotationally securely held in the shaft (2).

5. Spraying apparatus in accordance with claim 4, characterized in that the shaft (2) is open at the top and preferably also at the bottom.

6. Spraying apparatus in accordance with claim 4 or claim 5, characterized in that the shaft (2) has a ring step (13, 35), which forms an upwardly facing support surface for the flushing water container (3, 33).

7. Spraying apparatus in accordance with claim 6, characterized in that the flushing water container (3) extends down to and below the ring step (13) and has a ring step (14) complementary thereto and forming a downwardly facing counter-surface.

8. Spraying apparatus in accordance with claim 6, characterized in that the flushing water container (33) extends substantially only above the ring step (35) and that its base (34) lies on the ring step (35).

9. Spraying apparatus in accordance with claim 6 to 8, characterized in that the flushing water container (3, 33) and the shaft (2) are made complementary to one another at least above the ring step (13, 35).

10. Spraying apparatus in accordance with one of the preceding claims, characterized in that the shaft (2) is adequately narrow, at least in the base region of the main container (1) transverse to the longitudinal direction of the main container (1), to be able to provide stirring mechanisms in the base region of the main container (1) extending substantially over the full length of the main container (1), and in particular has flattened regions (16, 17) extending approximately parallel to the lateral boundaries (1c, 1d) of the main container (1), with complementary flattened regions (26, 28) of the flushing water container (3) corresponding to the flattened regions (16, 17) of the shaft.

## Revendications

1. Dispositif de pulvérisation mobile destiné à la pulvérisation, dans des champs, d'une bouillie à pulvériser, en particulier d'un agent liquide de protection des plantes, d'un engrais ou de produits similaires, comportant un récipient principal (1), destiné à la bouillie à pulvériser, monté sur un véhicule (18) autopropulseur ou ayant la configuration d'une remorque et de préférence de forme oblongue et disposé couché sur le véhicule (18), comportant également un récipient (3) destiné à l'eau de rinçage, également porté par le véhicule (18) et muni d'un ensemble de pulvérisation (21) disposé sur le véhicule (18) de préférence de façon à pouvoir être dégagé latéralement, lequel ensemble comprend des buses de pulvérisation (22) et des moyens (23) de pompage et d'équipement montés sur le véhicule (18), qui sont reliés par des conduits (11, 12, 24) au récipient principal (1), au récipient d'eau de rinçage (3) et aux buses de pulvérisation (22) de l'ensemble de pulvérisation (21) de telle façon qu'au choix, soit la bouillie à pulvériser est pompée à partir du récipient principal (1) jusqu'à l'ensemble mécanique (21) de pulvérisation soit l'eau de rinçage est pompée à partir du récipient (3) d'eau de rinçage jusque dans le récipient principal (1) ou bien jusqu'à l'ensemble mécanique (21) de pulvérisation ou bien encore jusqu'à un ensemble mécanique de nettoyage extérieur,
caractérisé en ce que
le récipient principal (1) présente un puits (2) sensiblement vertical, rendu étanche par rapport à son espace intérieur, dans lequel est prévu le récipient (3) d'eau de rinçage.

2. Dispositif de pulvérisation selon la revendication 1,
caractérisé en ce que
le récipient principal (1) a sensiblement la forme d'un cylindre couché, s'étendant dans la direction de déplacement et en ce que le puits (2) présente de préférence un écart égal par rapport aux deux limites latérales (1c, 1d) du récipient principal (1).

3. Dispositif de pulvérisation selon la revendication 1 ou 2,
caractérisé en ce que
le puits (2) a une forme oblongue orientée verticalement et qu'il présente de préférence au moins sensiblement une section circulaire ou rectangulaire.

4. Dispositif de pulvérisation selon l'une des revendications 1 à 3,
caractérisé en ce que
le récipient d'eau de rinçage (3) est conformé en un insert séparé qui est maintenu dans le puits (2) de préférence de façon fixe en rotation.

5. Dispositif de pulvérisation selon la revendication 4,
caractérisé en ce que
le puits (2) est ouvert en haut et de préférence également en bas.

6. Dispositif de pulvérisation selon la revendication 4 ou 5,
caractérisé en ce que
le puits (2) présente un épaulement annulaire (13, 35) qui constitue une surface d'appui, orientée vers le haut, pour le récipient (3, 33) d'eau de rinçage.

7. Dispositif de pulvérisation selon la revendication 6,
caractérisé en ce que
le récipient (3) d'eau de rinçage s'étend jusqu'en dessous de l'épaulement annulaire (13) et présente un épaulement annulaire (14) complémentaire de celui-ci, constituant une surface antagoniste orientée vers le bas.

8. Dispositif de pulvérisation selon la revendication 6,
caractérisé en ce que
le récipient (33) d'eau de rinçage ne s'étend sensiblement qu'au-dessus de l'épaulement annulaire (35) et repose par son fond (34) sur l'épaulement annulaire (35).

9. Dispositif de pulvérisation selon la revendication 6 ou 8,
caractérisé en ce que
le récipient (3, 33) d'eau de rinçage et le puits (2) ont une forme complémentaire l'un par rapport à l'autre au moins au-dessus de l'épaulement annulaire (13, 35).

10. Dispositif de pulvérisation selon l'une des revendications précédentes,
caractérisé en ce que
le puits (2) est, au moins dans la zone du fond du récipient principal (1), suffisamment étroit transversalement au sens longitudinal du récipient principal (1) pour pouvoir prévoir des mécanismes (20) d'agitation s'étendant sensiblement sur toute la longueur du récipient principal (1), et en particulier des parties aplaties (16, 17) s'étendant approximativement parallèlement aux limites latérales (1c, 1d) du récipient principal (1), auxquelles correspondent des parties aplaties (27, 28), de forme complémentaire, du récipient (3) d'eau de rinçage.
